Europäisches Patentamt

(19) European Patent Office

Office européen des brevets

(11) Publication number: **0 158 415**

A1

(12) # EUROPEAN PATENT APPLICATION

(21) Application number: **85301061.9**

(22) Date of filing: **18.02.85**

(51) Int. Cl.⁴: **H 02 G 1/08**

(30) Priority: **21.02.84 GB 8404514**

(43) Date of publication of application:
**16.10.85 Bulletin 85/42**

(84) Designated Contracting States:
**AT BE CH DE FR IT LI NL SE**

(71) Applicant: **WATER RESEARCH CENTRE**
**P.O. Box 16 Henley Road Medmenham**
**Marlow Buckinghamshire SL7 2HD(GB)**

(72) Inventor: **Ferrier, Duncan Cameron**
**Monksfield Blundell's Road**
**Tiverton Devon(GB)**

(72) Inventor: **Gale, John Christopher**
**Monkton Lea Winterbourne Monkton**
**Swindon Wiltshire(GB)**

(72) Inventor: **Hanna, Trevor Thomas**
**The Gatehouse Bath Road**
**Cricklade Wiltshire(GB)**

(72) Inventor: **Swallow, Ian Henry**
**Roma House Ashton Road**
**Siddington Cirencester Gloucester(GB)**

(72) Inventor: **Vickery, Melvin Douglas Albert**
**20 Park Road**
**Tiverton Devon(GB)**

(74) Representative: **Wain, Christopher Paul et al,**
**A.A. THORNTON & CO. Northumberland House 303-306**
**High Holborn**
**London WC1V 7LE(GB)**

(54) Installation of communications cables in a pipe.

(57) There is disclosed a machine for passing through a pipe and securing at least one cable or cable duct thereto by applying clips at intervals along the pipe. The machine comprises means for holding a plurality of clips (10) side-by-side as a bandolier with each clip encircling the cable(s) or duct(s) to be installed. It also comprises drilling means (28) for drilling a hole into the pipe and means (28) for engaging a leading clip of the bandolier into the drilled hole by pushing a pin portion (11) of the clip into that hole. A method of securing a cable or cable duct to a pipe is also disclosed. The machine is passed along the pipe from one end to a far end, drawing with it the cable or duct to be installed after the latter has been threaded through a bandolier of clips (10) on the machine. The machine is actuated to apply the leading clip of the bandolier at or adjacent said far end of the pipe, thus anchoring the cable or duct adjacent its forward end. The machine is then retracted a desired interval, and the process repeated until the machine reaches its starting point.

Fig.4.

- 1 -

## INSTALLATION OF COMMUNICATIONS CABLES

This invention relates to the running of communications cables to dwellings or other buildings. These cables may serve for the distribution of information to those buildings, for example in a cable television system, or for collecting information from those buildings, and they may be used for two-way communication. The cables themselves may be for example coaxial cables or fibre optic cables or twisted pairs, or any combination of such cables may be used.

We have proposed to run communication cables to dwellings or other buildings through the pre-existing underground pipes which serve to drain sewage and/or surface and storm water away from those buildings. We have devised methods, machines and materials for carrying out this proposal, which methods, machines and materials are described in our United Kingdom patent application 8324177, published under No. 2129627A.

We have now devised improvements for installing communications cables through those pipes which lead away from individual dwellings or other buildings and connect into the sides of a further pipe, which further or main pipe receives and carries away matter from all those side-connecting or lateral pipes. These improvements are also suited to installing the communications cables through a pipe which leads from one inspection chamber to another, from which latter inspection chamber a further pipe may extend for example to connect into the side of a said main pipe. In essence the improvements are applicable to pipes having manual access, for example by way of an inspection chamber, at one or both of their ends.

Generally such pipes, for which these improvements are devised, are significantly smaller in diameter or cross-section than the main pipe into which they feed (directly or indirectly) as a side-connection, and generally they are relatively short in length but may exhibit quite sharp bends. Usually only a small-capacity cable or group of cables is to be installed in each such pipe. In view of these considerations, there is a need for techniques to be used in these pipes which are different in nature and generally simpler than the cable installation techniques suited for the main pipe.

In accordance with this invention, as seen from one aspect, there is provided a machine for passing through an underground pipe and securing at least one cable or cable duct to the pipe by applying clips at intervals along the pipe, the machine comprising means for holding a plurality of clips side-by-side as a bandolier with each clip encircling the cable(s) or duct(s) to be installed, and means for drilling a hole into the pipe and for engaging a leading clip of the bandolier into the drilled hole by pushing a pin portion of the clip into that hole.

Conveniently the cable or duct (or group of cables or ducts) to be installed is passed along the pipe from a manually-accessible end of that pipe (e.g. from an inspection chamber on the site of the dwelling or building concerned). This step may be carried out by passing the machine along the pipe to its far end, drawing with it the cable or duct to be installed after the latter has been threaded through the bandolier of clips on the machine. Next the machine is actuated to apply the leading clip of the bandolier at or adjacent that far end of the pipe, thus anchoring the cable or duct adjacent its forward end. Then the machine is retracted a desired interval (towards the inspection chamber end of the lateral pipe) and actuated again to apply the next clip of the bandolier. Such retraction and actuation of the machine is repeated, to secure the cable or duct at intervals, until the machine reaches the inspection chamber again and can be removed. As mentioned above, the pipe may run from an inspection chamber to a T-connection with a main pipe, or it may run from one inspection chamber to another inspection chamber.

Preferably the machine is self-propelling in the forwards direction and then for this purpose it is provided with a water jetting arrangement and a flexible hose for high pressure water is connected to the rear end of the machine body. This hose may be twisted manually at the inspection chamber end in order to turn the machine bodily, should this be necessary to direct the drilling means at the required circumferential part of the pipe: preferably the cable or duct is secured to the pipe surface generally at the soffit (top) of the pipe. The machine preferably is further arranged for water jetting to propel the machine in its retracting direction when required, or at least to supplement any pulling force applied to e.g. the water hose: this prevents the possibility of the machine becoming locked-up at any sharp bend in the lateral pipe if "pull" alone were being relied upon to effect retraction of the machine. Preferably the machine includes a deflector arrangement which may be positioned so as to deflect the water jet for propelling the machine in one direction (e.g. the retracting direction) or instead positioned so as not to interfere with the water jet, for propelling the machine in the opposite direction (e.g. the forwards direction).

Preferably the machine body is generally elliptical in longitudinal section so as to enable it to pass round quite sharp bends in the pipe. Conveniently the machine may be provided with a microphone connected by leads to a speaker or earphones at ground level: the sound of the water jets impinging against pipe joints is found to be quite different from the sound of the water jets impinging on the plain surface of the pipes between joints. Accordingly, a simple and reliable technique is provided to ensure that the machine is not brought to rest at a position where it would drill into a pipe joint. Preferably also the machine body incorporates inclinometers so that the rotary position of the machine about its lengthwise axis can be monitored, and also the attitude of its lengthwise axis can be monitored to determine the direction (in the vertical plane) of the pipe in which it is working.

Conveniently, and as seen from a second aspect of this invention, there is provided a clip for securing the cable or duct to the pipe surface, which is a one-piece plastics clip having a pin portion and a strap portion, the strap portion having one end united to a head end of the pin portion, then extending around in a loop for encircling the cable or duct and preformed with an aperture adjacent its other end, the other end of the pin portion being registered with said aperture and frangibly joined around its own periphery to the periphery of said aperture. Thus if the clip is positioned with the apertured end of its strap portion against the pipe surface, with its aperture over a drilled hole, then by applying axial pressure to the pin portion at its head end, its other end shears from the strap and the pin passes through the aperture and into the drilled hole as an interference fit to become lodged therein: at the same time the strap loop is closed about the encircled cable or duct.

Preferably, the drill of the machine firstly drills the hole, then retracts to enable the leading clip of the bandolier to be advanced into a position registering with the drilled hole, then the drill is advanced again (without running) to apply axial pressure to the pin portion of the clip to shear the pin portion from the periphery of the aperture in the strap portion and to drive the pin portion into the drilled hole.

Embodiments of this invention will now be described, by way of examples only, with reference to the accompanying drawings, in which:

Figure 1 is a diagrammatic section through a main sewage-draining pipe and showing one of a plurality of lateral pipes connecting into the side of that main pipe;

Figure 2 shows a clip, in an end view and a side view, in its as-moulded condition;

Figure 3 shows the clip, again in an end view and a side view, after it has been sheared into an installed condition;

Figure 4 is a plan view of a machine for passing through a said lateral pipe, for example, and securing a cable or cable duct to that pipe by clips at intervals;

Figure 5 is a longitudinal vertical section through the machine which is shown in Figure 4;

Figures 6-9 are cross-sections of the body on the lines VI-VI to IX-IX of Figure 5; and

Figure 10 is a cross-section on the line X-X of Figure 4.

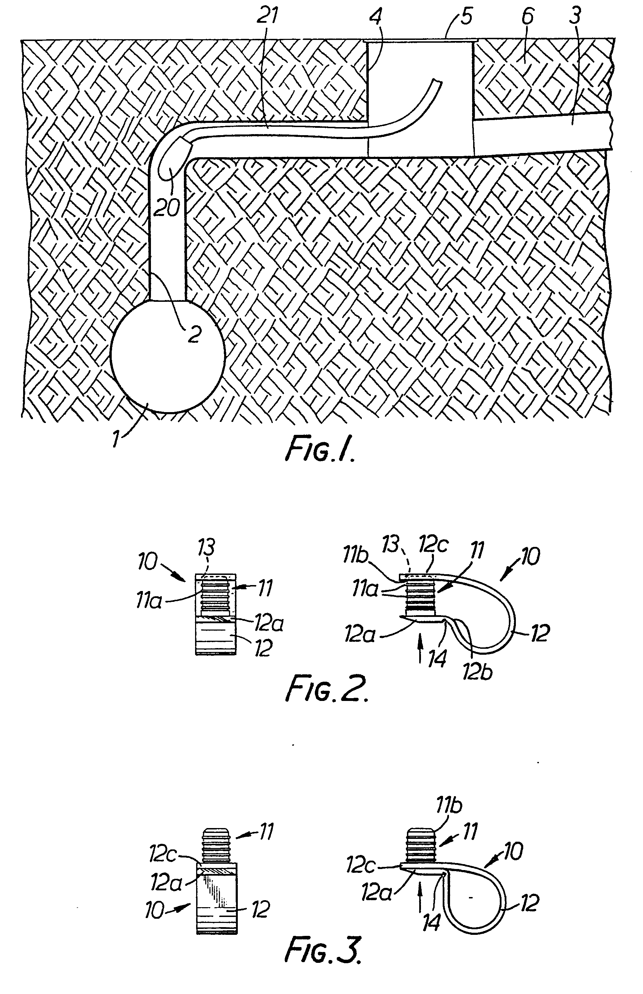

Referring to Figure 1, there is shown an example of pipe configuration on which this invention may be used. A main pipe 1 is shown together with one of a plurality of lateral pipes 2 which connect into the side of the main pipe at intervals along it. The lateral pipe 2 leads away from an individual dwelling or other building and typically, as shown, a pipe 3 will lead from that building to an inspection chamber 4 (closed by a manhole cover 5) and the pipe 2 leads from this chamber to the main pipe 1. In the drawing, the pipe 2 is shown with a sharp, 90° bend in the vertical plane, between a horizontal portion leading from the inspection chamber and a vertical portion which connects into the main pipe 1 at its upper side. In practice, some lateral pipes will be straight overall and some will exhibit at least one bend in the horizontal plane. There may be a plurality of pipes 3 leading into the inspection chamber 4 and the or each pipe 3 may lead from another inspection chamber at its other end. The machine of this invention may be used to install cables or cable ducts in the pipes 3 or in general any pipe having one end with appropriate access for entering the machine and cable or duct.

In order to run at least one communications cable to the building which the pipes 3,2 serve, it is necessary to install the cable or cables to run from the main pipe 1 and through pipe 2 to the inspection chamber 4 and possibly through pipe 3 to an inspection chamber closer to the building to be served. The or each such cable may be terminated within the inspection chamber to which it leads, for coupling to another cable which leads to the building, perhaps buried in the ground 6.

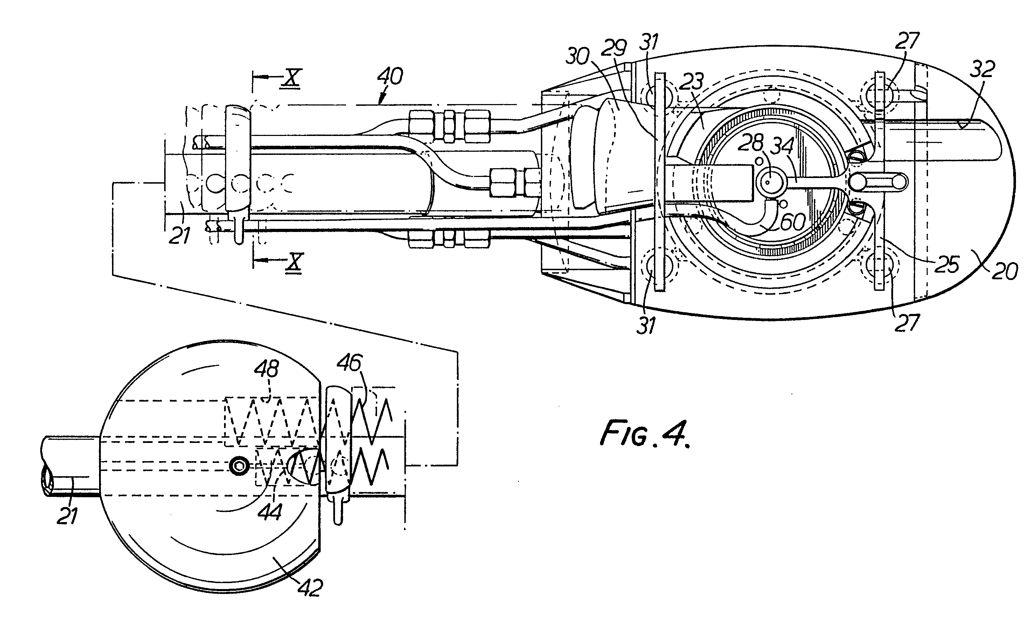

In accordance with this invention, at least one cable or cable duct is secured to the surface of lateral pipe 2 by applying at intervals clips as shown in Figures 2 and 3. The clip 10 comprises a one-piece plastics injection moulding, having a cylindrical pin portion 11 provided with annular fluting 11a, and a strap portion 12. One end 12a of this strap portion is united to a head end of the pin portion such that the pin projects normally from the strap portion at this point. The strap portion 12 extends in a generally P-shaped loop, with an abrupt bend 12b adjacent the head end of the pin portion, such that in the as-moulded condition of the clip (Figure 2) the other end 12c of the strap portion lies across and is frangibly connected to the other end 11b of the pin portion. In particular, the end 12c of the strap portion is formed with an aperture 13 with which the end 11b of the pin portion is registered, this end of the pin portion being frangibly joined around its own periphery to the periphery of the aperture 13.

By applying axial pressure to the head end of the pin portion (as indicated by the arrow in Figures 2 and 3) when the apertured end of the strap is disposed against the pipe surface and with the aperture 13 registered over a hole drilled in the pipe, the pin portion is sheared from the strap portion and passes through the aperture 13 and into the drilled hole as an interference fit: at the same time the strap loop closes around the encircled cable(s) or duct(s) (Figure 3). The strap portion is preferably formed with a groove 14 on its outer side adjacent the bend 12b, to aid flexing of the strap portion at this region upon closure of the strap loop as the pin portion passes through the aperture to bring the ends of the strap flat against each other as shown in Figure 3.

The clip installing machine will now be described with reference to Figures 4-10 of the drawings. The machine comprises a body or pod 20 which is generally elliptical in longitudinal section, so as to enable it to pass around a sharp bend in the pipe (see Figure 1) despite having a maximum diameter which is a substantial proportion of the pipe diameter. The rear end of the body 20 is connected to a flexible hose 21 for the supply of high pressure water:  the body is provided with a water jetting nozzle 19 generally forwardly and slightly downwardly directed for propelling the machine in its retracting direction through the pipe or at least to supplement any pulling force applied e.g. to the hose 21 for retracting the machine.  Further, a deflector arrangement is provided for deflecting the jet of water so as to direct it generally rearwardly and slightly downwardly, to propel the machine in its forwards direction.  This deflecting arrangement comprises a Pelton bucket type of deflector 18 which is split into two halves on a vertical longitudinal section of the machine:  these two halves of the deflector bucket are spring-urged apart about a pivot 17 and a hydraulic actuator 17a is provided for moving them together when it is required to deflect the water jet for propelling the machine forwards.

The body 20 is generally open towards its top side and houses a shell 22 which is slidable along a vertical axis of the body under applied fluid pressure. The shell 22 is also open towards the top side of the body 20 and houses a drill body 24 which is slidable relative to the shell 22, along the vertical axis of the body 20, under applied fluid pressure.  The drill body 24 houses an electric motor 26 which drives a drill 28. At its upper side, the shell 22 carries a generally annular abutment member 23.  Towards the forward end of the body 20, a cross-member 25 is supported on two posts 27 (see Figure 7) which are slidable along axes parallel to the vertical axis of the body 20.  Towards the rearward end of the body 20, a cross-member 29 is similarly supported on two posts 31 which are slidable parallel to the vertical axis of the body 20.  The cross-member 29 mounts a tubular guide portion 30 which serves to receive successive clips 10 from a magazine or bandolier in which they are disposed side-by-side.  The tubular guide 30 is thus shaped in cross-section to correspond with the outline shape of the clip in its as-moulded condition (Figure 2). A rearward projection 34 of the foward cross-member 25 provides a stop against which the leading clip of the magazine or bandolier comes to rest.

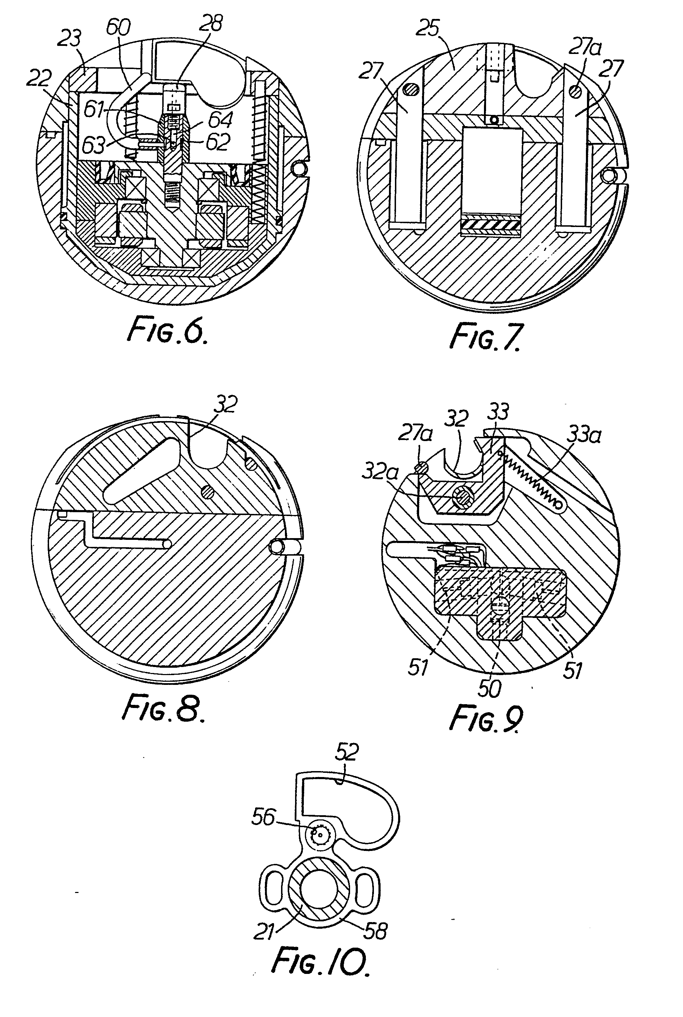

The forward end of the body 20 is formed with a groove 32 for receiving a forward-end portion of the cable or duct to be installed: a catch 33 (see Figure 9) serves to retain the forward-end portion of that cable or duct in the groove 32. This catch is mounted about a pivot 32a and urged by a spring 33a towards a position in which it will release the cable or duct, but the catch is initially kept in its "retaining" position by a peg 27a which projects from one of the posts 27 of the forward cross-member 25.

As previously mentioned, the body 20 is equipped with a microphone connected by leads to a speaker or earphones at ground level to detect when the propelling water jets impinge upon pipe joints, so that drilling into these joints can be avoided. The hose 21 may be twisted manually, at the inspection chamber, so as to turn the machine bodily should this be necessary to direct the drill 28 at the required circumferential part of the pipe. Alternatively or in addition, the machine may incorporate a powered means to turn it bodily if required.

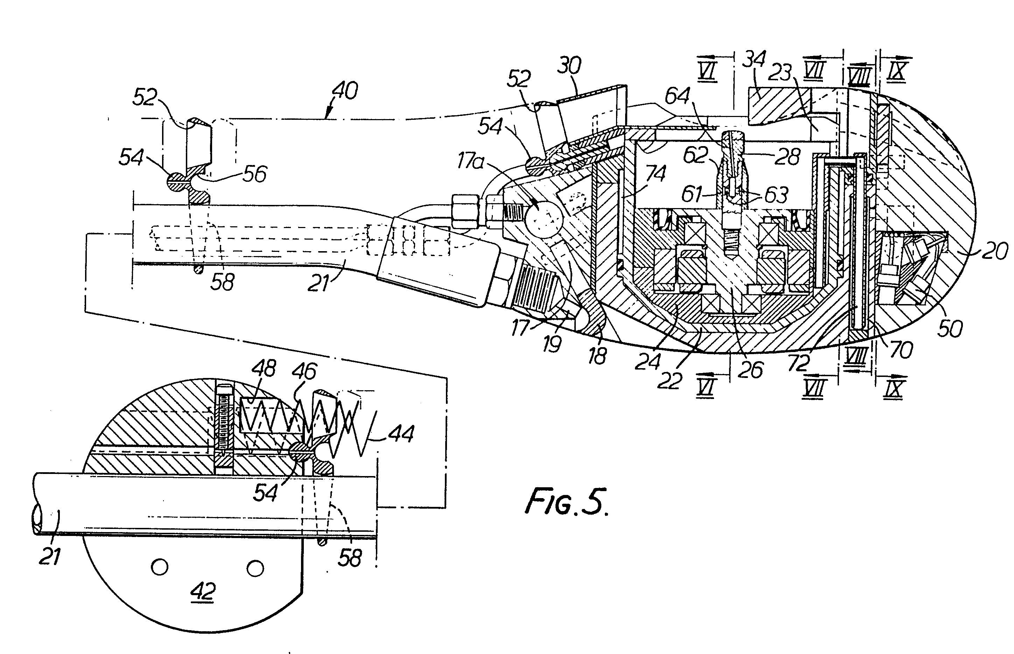

The body further incorporates an arrangement of inclinometers so that the rotary position of the machine body 20 about its lengthwise axis can be monitored, and also the attitude of its lengthwise axis can be monitored. Thus in the example of Figure 5, there are three mercury switches 50 set at respective orientations: according to which (if any) of these switches have a contacts-made condition, logic at the operating point of the machine can determine whether the longitudinal axis of the machine body 20 is horizontal, within a low limit, or is inclined to the horizontal within first or second ranges of angles or beyond a higher limit.  Also, as shown in Figure 9, there are two more mercury switches 51 disposed so that according to which (if either) of these switches has a contacts-made condition, the logic at the operating point can determine whether the transverse axis of the machine body is horizontal (within a limit) or is rotated beyond that limit in one direction or the other.

It will be noted (with reference to Figure 6) that the drill 28 is water-cooled, a water-supply pipe 60 feeding into a sleeve 61 around the drill and thus into an annular groove 62 of the drill, which via radial passages 63 communicates with an axial passage 64 of the drill, leading to its working tip.

In operation, once the body 20 has been moved to a required point along the pipe, and if necessary rotated to appropriate orientation, it is wedged against movement as follows:  via a first hydraulic line, fluid pressure is applied to the underside of shell 22 causing this to emerge from the top side of the body 20.  After the shell has moved a certain distance, ports are uncovered between the underside of shell 22 and the cylinders in which the posts of the two cross-members are situated, thus causing these cross-members to be raised out of the body 20.  Eventually, the cross-members will abut the soffit of the pipe, and/or the annular member of the shell 22 will abut the pipe soffit.  Then the drill is rotated whilst at the same time its body is urged upwards relative to the shell 22 by applying fluid pressure through a second hydraulic line to a cylinder 70 which (via a standpipe arrangement 72) communicates with the underside of the drill body.  Next the drill body is retracted by retracting shell 22 relative to machine body 20, by applying fluid pressure through a third hydraulic line to an annulus 74:  the retraction of the drill 28 is sufficient to enable the clips of the bandolier to advance through the tubular guide 30 such that the leading clip comes to rest against the stop projection 34 with the head end of its pin portion aligned with the end of drill 28. Then the drill 28 is advanced without rotation, by sliding the shell 22 within the machine body 20, to apply appropriate axial force to the pin portion of the clip in order to shear it and push the pin portion into the drilled hole. The cable or duct, which in an initial state was threaded through all the clips of the magazine, is thus secured at this point to the pipe surface. The drill body is now locked relative to the shell 22 (in an intermediate position which prevents the clips of the magazine moving along) by hydraulic valves which prevent flow of fluid out of cylinder 70. The shell 22 and the two cross members are now retracted into the machine body 20, carrying also the clip guide 30, so that the machine can be moved along the pipe to the next position at which a clip is to be applied. The forward-end portion of the cable or duct has become released from catch 33, because the initial upwards movement of the cross members caused its retaining peg to release that catch. The drill body is maintained locked in its intermediate position, relative to the shell, until after the machine reaches the site for the next clip and, at that site, shell 22 and cross-members 25 and 29 have been extended again to wedge the machine body within the pipe ready for the next hole to be drilled. It will be noted that the extension of drill 28 is limited, at each drilling operation, by abutment of drill body 24 against the inside or lower surface of annular member 23, thus ensuring a constant drill penetration of the pipe even though the pipe diameter may vary.

Figures 4 and 5 also show the magazine or bandolier arrangement for the clips and further reference should be made to Figure 10. This magazine or bandolier arrangement comprises generally a flexible tube 40 coupled at its forward end to the guide 30 and at its rearward end to a spherical stop 42 which is clamped to the hose 21. Tube 40 is shaped in cross-section as a guide 30 and hence as the outline of the clips, and houses a plurality of these clips side-by-side. Two compression springs 44,46 act between the stop 42 and the rear clip of the magazine, in order to advance the clips each time the drill is retracted. Stop 42 is formed with a circular through passage through which the cable or duct to be installed is threaded, and spring 44 registers

with this through passage and further receives the cable or duct to be installed. Spring 46 acts between a blind bore 48 in the stop 42 and the region of the pin portion of the trailing clip in the bandolier.

The flexible tube 40 comprises two sections, a first or rearward section which is coupled along its length to the hose 21, and a second or forward section which is free to move transversely of the hose 21 upon transverse movements of the clip guide 30 of the machine body 20. In particular, the tube 40 comprises a plurality of flat elements 50 each with an aperture 52 corresponding to the outline of the as-moulded clip: the elements are pivotally joined together side-by-side by a projecting ball 54 on the rear side of each element engaging with a socket 56 on the forward side of its neighbouring element: these ball-and socket connections are positioned as shown adjacent the pin head region of the clip which it will house. Those elements which form the rear section of the tube 40 are provided with an apertured extension 58 encircling the hose 21. Each element, around its clip aperture 52, is tapered on its forward side so as to engage partially within the rearward side of its neighbouring element, at least to permit bending of the tube 40 in the sense which pivots the elements towards each other.

It will be appreciated that in use of the described machine, and as explained previously, firstly the cable(s) or duct(s) to be installed must be threaded through the stop 42, through the bandolier of clips and extended to the front of the machine body. Then the latter is disposed in the intended pipe at one end (e.g. pipe 2 at the inspection chamber 4-Figure 1) and propelled along that pipe until it reaches its other end - for example the junction of pipe 2 with the main pipe 1. A closed circuit television camera, advanced·

along main pipe 1, will serve in this case to monitor when the machine body 20 reaches close to this pipe junction, or for example when the cable or duct projects by a required predetermined amount into the main pipe 1. Then the first clip can be applied in the manner described above, and thereafter the machine body is retracted successively to apply clips at intervals until the machine arrives back at the inspection chamber at which it was inserted.

In one mode of operation, a flexible metal duct housing a cable or a draw line is required to project by a predetermined length into the main pipe 1 from the lateral pipe 2, and this condition can be ensured before the first clip is applied. Such cable or draw line, in this mode of operation, carries a hooking arrangement at its projecting end. Once the metal duct is secured in position along the length of the lateral pipe 2, a machine (described in our United Kingdom patent application 8324177) is advanced along the main pipe 1 to intercept the projecting metal duct and pick up the hooking arrangement: the enclosed cable or draw line can then be pulled through the metal duct and along pipe 1.

When a metal duct is to be installed for housing the cable or cables, that duct may conveniently comprise a helical winding of wire with the turns contiguous, in the manner of a close-wound coil spring.

It will be appreicated that this invention provides for installing cables or ducts in the lateral pipes with relatively low expense for the materials used, i.e. the clips.

0158415

- 15 -

<u>CLAIMS</u>

1.  A machine for passing through a pipe and securing at least one cable or cable duct thereto by applying clips at intervals along the pipe, characterised in that the machine comprises means for holding a plurality of clips (10) side-by-side as a bandolier with each clip (10) encircling the cable(s) or duct(s) to be installed, means (28) for drilling a hole into the pipe and means (28) for engaging a leading clip of the bandolier into the drilled hole by pushing a pin portion of the clip into that hole.

2.  A machine as claimed in claim 1, comprising first water jetting means (19) to render the machine self-propelling in one direction.

3.  A machine as claimed in claim 2, further comprising second water jetting means to propel the machine in a direction opposite to said one direction.

4.  A machine as claimed in either claim 2 or claim 3, comprising deflector means (18) positionable either to deflect a water jet for propelling the machine in one direction or instead not to interfere with the water jet for propelling the machine in a direction opposite to said one direction.

5.  A machine as claimed in any one of the preceding claims, comprising a body (20) of generally elliptical longitudinal section, whereby the machine is enabled to pass round bends in the pipe.

6.        A machine as claimed in any one of the preceding claims, further provided with a microphone connected by leads to a speaker or earphones located at or adjacent an end of the pipe.

7.        A machine as claimed in any one of the preceding claims comprising a body incorporating at least one inclinometer (50) to monitor the rotary position of the machine about its lengthwise axis and/or to monitor the attitude of its lengthwise axis.

8.        A method of securing a cable or cable duct to a pipe by applying spaced clips to the pipe, characterised in that the method comprises the steps of passing a machine along the pipe from one end to a far end, drawing with it the cable or duct to be installed after the latter has been threaded through a bandolier of clips (10) on the machine, actuating the machine to apply the leading clip (10) of the bandolier at or adjacent said far end of the pipe, thus anchoring the cable or duct adjacent its forward end, retracting the machine a desired interval, actuating the machine again to apply the next clip of the bandolier, and repeating said retraction and actuation steps of the machine until the machine reaches said one end.

9.        A clip for securing a cable or cable duct to a pipe surface, characterised in that it comprises a pin portion (11) and a strap portion (12), the strap portion having one end (12a) united to a head end of the pin portion, and extending to its other end (12c) in a loop for encircling the cable or duct, the strap portion being provided with an aperture (13) adjacent its other end (12c), the other end (11b) of the pin portion being registered with said aperture (13) and frangibly joined around its own periphery to the periphery of said aperture.

10.      A method of securing a cable or duct to a pipe surface using a clip as claimed in claim 9, characterised in that the method comprises the steps of positioning the clip (10) with the apertured end of its strap portion (12) against the pipe surface, with its aperture (13) over a predrilled hole, and applying axial pressure to the pin portion (11) of the clip at its head end to shear its other end from the strap portion (12) and cause the pin portion (11) to pass through the aperture (13) and into the drilled hole as an interference fit to become lodged therein; and at the same time causing the strap loop to become closed about the encircled cable or duct.

11.      A method as claimed in claim 10, further characterised by the step of drilling a hole using a drill (28) of a machine, wherein the drill (28) is retracted to enable the leading clip (10) of a bandolier of clips to be advanced into a position registering with the drilled hole, and wherein said axial pressure is applied to the pin portion (11) of the clip by advancing the drill (28) again (without its running).

0158415

FIG.1.

FIG.2.

FIG.3.

FIG. 4.

FIG.5.

0158415

0158415

FIG.6.

FIG.7.

FIG.8.

FIG.9

FIG.10.

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| A,D P | GB-A-2 129 627 (WATER RESEARCH CENTRE) * Page 10, line 77 - page 11, line 15 * | 1 | H 02 G 1/08 |

-----

TECHNICAL FIELDS SEARCHED (Int. Cl 4)

H 02 G 1/00

The present search report has been drawn up for all claims

| Place of search | Date of completion of the search | Examiner |
|---|---|---|
| THE HAGUE | 29-05-1985 | LOMMEL A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82